(19) Europäisches Patentamt
European Patent Office
Office européen des brevets

(11) Veröffentlichungsnummer : **0 420 793 B1**

(12) # EUROPÄISCHE PATENTSCHRIFT

(45) Veröffentlichungstag der Patentschrift :
**10.11.93 Patentblatt 93/45**

(51) Int. Cl.$^5$ : **C08C 19/44,** C08F 36/04, C08F 4/48, C08F 2/42

(21) Anmeldenummer : **90810629.7**

(22) Anmeldetag : **21.08.90**

(54) **Phenolische Verbindungen als Kettenabbrecher für die anionische Lösungspolymerisation von Dienen.**

(30) Priorität : **30.08.89 CH 3141/89**

(43) Veröffentlichungstag der Anmeldung :
**03.04.91 Patentblatt 91/14**

(45) Bekanntmachung des Hinweises auf die Patenterteilung :
**10.11.93 Patentblatt 93/45**

(84) Benannte Vertragsstaaten :
**BE DE FR GB IT NL**

(56) Entgegenhaltungen :
**EP-A- 0 273 013**
**US-A- 4 377 666**

(73) Patentinhaber : **CIBA-GEIGY AG**
**Klybeckstrasse 141**
**CH-4002 Basel (CH)**

(72) Erfinder : **Knobloch, Gerrit, Dr.**
**Im Stigler 25**
**CH-4312 Magden (CH)**

EP 0 420 793 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Abbrechen der Polymerisation bei der anionischen Lösungspolymerisation von 1,3-Dienen.

Die anionische Lösungsmittelpolymerisation von 1,3-Dienen ist ein Verfahren, das in der industriellen Technik zur Herstellung von Polybutadien und Polyisopren sowie zur Herstellung von Styrol-Butadien-Copolymeren verwendet wird. Als Polymerisationsinitiatoren werden hierbei vorwiegend Organolithiumverbindungen, insbesondere Lithiumalkyle eingesetzt, die in den verwendeten Kohlenwasserstoff-Lösungsmitteln löslich sind. Es entsteht ein "lebendes Polymer", das am Kettenende eine Organolithiumgruppe besitzt. Zum Abbrechen der Polymerisation muss diese Organolithiumgruppe zerstört werden. Hierzu setzt man protonische Verbindungen zu, wie z.B. Wasser oder Säuren, insbesondere aber Alkohole, wie z.B. Methanol. Die weitere Aufarbeitung geschieht meist durch Zusatz eines Antioxidans und Koagulation in einem wässrigen Medium oder durch Abdestillieren des Lösungsmittels. Der Zusatz des Antioxidans geschieht bevor das Polymer mit Luftsauerstoff in Kontakt kommt. Hierfür geeignete Antioxidantien sind sterisch gehinderte Phenole, wie z.B. das 2,6-Di-t-butyl-p-cresol.

Da Phenole auf Grund ihrer OH-Gruppe in der Lage sind, Organolithiumverbindungen zu zerstören, wäre es denkbar, solche phenolische Antioxidantien als Kettenabbrecher direkt zur Lösung des lebenden Polymeren zuzugeben und dadurch zwei Funktionen mit einem Schritt zu erfüllen, nämlich den Kettenabbruch und die antioxidative Stabilisierung.

Eigene Versuche zeigten, dass bei der Zugabe von solchen phenolischen Antioxidantien wie z.B. 2,6-Di-t-butyl-p-cresol Verfärbungen und Trübungen der Lösung eintreten. Die danach ausgefällten Polymeren sind ebenfalls mehr oder minder verfärbt. Es hat sich jedoch gezeigt, dass beim Zusatz ganz bestimmter schwefelhaltiger phenolischer Antioxidantien keine Verfärbung und keine Trübung eintritt.

In der Ep-A-273 013 sind Thiomethylphenole, unter anderen auch solche, welche zwei phenolische Einheiten im Molekül enthalten, beschrieben. Sie werden als Antioxidantien in Elastomer- und Schmierstoffzusammensetzungen verwendet.

Im US-A-4 377 666 werden konjugierte Dien-Polymere mit Ester-funktionalisierten phenolischen Antioxidantien behandelt, wobei die Antioxidantien als nicht extrahierbare Bestandteile im Polymer gebunden werden.

Die Erfindung betrifft daher ein Verfahren zum Abbrechen der mit Organolithiumverbindungen initiierten anionischen Lösungspolymerisation von 1,3-Dienen und deren Copolymerisation mit Styrolverbindungen durch Zusatz eines Kettenabbrechers zur Polymerisationslösung, dadurch gekennzeichnet, dass man als Kettenabbrecher mindestens ein phenolisches Antioxidans der Formel I verwendet,

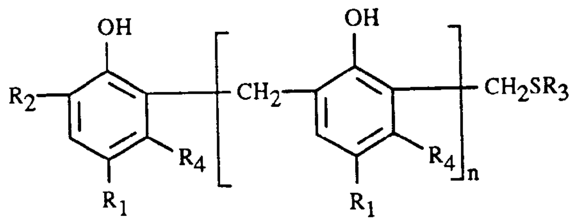

I

worin n 0 bis 3 ist,
$R_1$ und $R_2$ unabhängig voneinander $C_1$-$C_{12}$-Alkyl, $C_5$-$C_8$-Cycloalkyl oder -$CH_2SR_3$ bedeuten,
$R_3$ $C_1$-$C_{18}$-Alkyl, Phenyl oder Benzyl bedeutet und
$R_4$ Wasserstoff oder Methyl bedeutet.

$R_1$ und $R_2$ als $C_1$-$C_8$-Alkyl können unverzweigte oder verzweigte Alkylreste sein wie z.B. Methyl, Ethyl, n-Propyl, iso-Propyl, n-Butyl, sec-Butyl, tert-Butyl, iso-Pentyl, tert-Pentyl, n-Hexyl, n-Heptyl, n-Octyl oder 2-Ethylhexyl. $R_3$ als $C_1$-$C_{18}$-Alkyl kann darüber hinaus auch z.B. Decyl, Dodecyl, Tetradecyl, Hexadecyl oder Octadecyl sein.

Bevorzugt verwendet man als Kettenabbrecher eine Verbindung der Formel I, worin n 0 oder 1, $R_1$ und $R_2$ unabhängig voneinander $C_1$-$C_4$-Alkyl oder -$CH_2SR_3$ bedeuten, $R_3$ $C_4$-$C_{18}$-Alkyl, Benzyl oder Phenyl bedeutet und $R_4$ Wasserstoff ist.

Bevorzugt verwendet man Verbindungen der Formel I, worin n 0 ist.

Es können auch Gemische solcher Verbindungen verwendet werden, beispielsweise Reaktionsgemische, die Verbindungen der Formel I mit verschiedenen n enthalten.

Als besonders geeignet hat sich die Verbindung der Formel

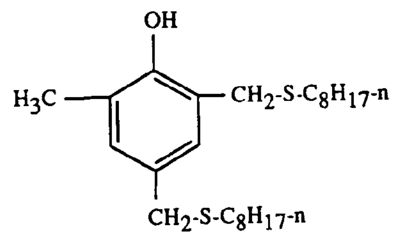

erwiesen.

Die erfindungsgemässen Kettenabbrecher werden der Polymerisationslösung vorzugsweise in einer solchen Menge zugesetzt, dass pro Mol der verwendeten Organolithiumverbindung mindestens ein Mol phenolischer Hydroxylgruppen vorliegt. Ein Ueberschuss schadet nicht, sondern trägt zur antioxidativen Stabilisierung des Polymeren bei. Vorzugsweise wird der Kettenabbrecher als Lösung in einem inerten Lösungsmittel zugesetzt.

Es hat sich überraschend gezeigt, dass gleichzeitig mit der Verbindung der Formel I oder unmittelbar darauf auch andere phenolische Antioxidantien zugesetzt werden können, ohne dass es zu Verfärbungen kommt.

Beispiele von hierfür geeigneten phenolischen Antioxidantien sind:

1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

3. Hydroxylierte Thiodiphenylether, z.B. 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol), 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenol)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglykol-bis-[3,3-bis-(3'-tert.buryl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methylbenzyl)-6-tert.butyl-4-methyl-phenyl]-terephthalat.

5. Benzylverbindungen, z.B. 1,3,5-Tris-(3,4-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylesters, 1,3,5-Tris-(3,5-dicyclohexyl-4-hydroxybenzyl)isocyanurat.

6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.-butyl-4-hydroxyphenyl)-carbaminsäureoctylester.

7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

9. Ester der B-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

Das erfindungsgemässe Verfahren ist anwendbar auf die anionische Lösungspolymerisation von 1,3-Dienen, insbesondere von Butadien und Isopren, und deren Copolymerisation mit Styrolverbindungen, insbesondere mit Styrol. Als Initiatoren werden Organolithiumverbindungen verwendet, insbesondere Lithiumalkyle, wie z.B. n-Butyllithium, t-Butyllithium oder i-Propyllithium. Als Lösungsmittel werden vor allem Kohlenwasserstoffe, wie z.B. Hexan, Cyclohexan oder Alkangemische verwendet. Zur Regelung der Stereostruktur des Polymerisates werden oft kleine Mengen eines polaren Lösungsmittels, wie z.B. Tetrahydrofuran oder Diglyme, zugesetzt. Nähere Details über die Durchführung der anionischen Lösungspolymerisation von 1,3-Dienen sind in der Literatur zu finden, z.B. in Encyclopedia of Polymer Science and Engineering, Vol. 2 (1985), 1-43, J. Wiley & Sons.

Die folgenden Beispiele zeigen den Effekt verschiedener Kettenabbrecher auf das Aussehen der Polymerisatlösung. Darin bedeuten Teile Gewichtsteile und % Gewichts-%.

Beispiel

Ein 2 l-Glaskolben wird unter Stickstoff-Atmosphäre mit 760 g trockenem Cyclohexan, 0,07 g Tetrahydrofuran und 100 g 1,3-Butadien beschickt. Unter Rühren werden 6,4 mMol n-Butyllithium in Form einer 10%-igen Lösung in Hexan zugegeben. Die Lösung wird auf 70°C erwärmt und 60 Minuten bei dieser Temperatur gehalten. Dann werden 6,3 mMol eines Kettenabbrechers in Form einer etwa 10%-igen Lösung in Cyclohexan zugesetzt. Folgende phenolische Antioxidantien werden als Kettenabbrecher verwendet:

AO-1 2,6-Di-tert.butyl-p-cresol (Vergleichsbeispiel)
AO-2 Octadecyl-3,5-di-tert.butyl-4-hydroxyphenylpropionat (Vergleichsbeispiel)
AO-3 2-(3,5-Di-tert.butyl-4-hydroxyphenylamino)-4,6-bis(octylthio)-1,3,5-triazin (Vergleischsbeispiel)
AO-4 2,2'-Methylen-bis(6-tert.butyl-4-methylphenol) (Vergleichsbeispiel)
AO-5 2,6-Di-tert.butyl-4-dodecylthiomethylphenol (Vergleichsbeispiel)
AO-6 2,4-Bis(octyloxycarbonylmethylthiomethyl)-6-tert.butylphenol (Vergleichsbeispiel)
AO-7 2-Methyl-4,6-bis(n-octylthiomethyl)-phenol (erfindungsgemäss)
AO-8 2,4-Bis(dodecylthiomethyl)-6-methylphenol (erfindungsgemäss)
AO-9 2,4-Bis(dodecylthiomethyl)-3,6-dimethylphenol (erfindungsgemäss)
AO-10 Reaktionsprodukt aus p-Nonylphenol, Dodecylmercaptan und Formaldedyd, enthaltend die Verbindungen der Formel I, worin $R_4$ Wasserstoff, $R_1$ Nonyl und n 0 bis 3 sind (erfindungsgemäss)

Nach 5 Minuten und nach 60 Minuten wird das Aussehen der Lösung visuell beurteilt. Die Ergebnisse sind in der folgenden Tabelle aufgeführt.

| | | Aussehen der Lösung nach | |
|---|---|---|---|
| | Kettenabbrecher | 5 Minuten | 60 Minuten |
| Vergleichs-beispiele | AO-1 | hellgelb, klar | gelbbraun, trübe |
| | AO-2 | weiss, trübe | gelblich, trübe |
| | AO-3 | gelbbraun, trübe | braun, trübe |
| | AO-4 | gelbbraun, klar | schwarzbraun, klar |
| | AO-5 | hellbrauner Niederschlag | dunkelbrauner Niederschlag |
| | AO-6 | gelber Niederschlag | hellbrauner Niederschlag |
| erfindungs-gemäß | AO-7 | farblos, klar | farblos, klar |
| | AO-8 | farblos, klar | farblos, klar |
| | AO-9 | farblos, klar | farblos, klar |

Man ersieht daraus, dass bei Zusatz der erfindungsgemässen Verbindungen die Lösung farblos und klar bleibt, während mit allen anderen Kettenabbrechern Verfärbungen und Trübungen (Niederschläge) auftreten.

In einer weiteren Versuchsreihe wird als Kettenabbrecher ein Gemisch von 6,4 mMol AO-7 und 6,4 mMol AO-1 oder AO-2 oder AO-3 verwendet bei sonst gleichbleibender Ausführung der Polymerisation. In allen drei

Fällen bleibt die Lösung auch nach 3 Stunden farblos und klar.

## Patentansprüche

1. Verfahren zum Abbrechen der mit Organolithiumverbindungen initiierten anionischen Lösungspolymerisation von 1,3-Dienen und deren Copolymerisation mit Styrolverbindungen durch Zusatz eines Kettenabbrechers zur Polymerisationslösung, dadurch gekennzeichnet, dass man als Kettenabbrecher mindestens ein phenolisches Antioxidans der Formel I verwendet,

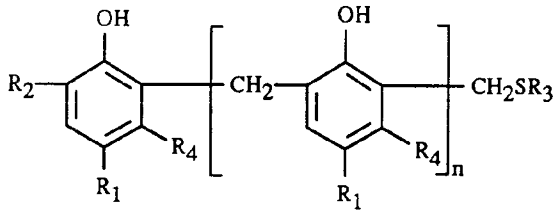 I

worin n 0 bis 3 ist,
$R_1$ und $R_2$ unabhängig voneinander $C_1$-$C_{12}$-Alkyl, $C_5$-$C_8$-Cycloalkyl oder $-CH_2SR_3$ bedeuten,
$R_3$ $C_1$-$C_{18}$-Alkyl, Phenyl oder Benzyl bedeutet und
$R_4$ Wasserstoff oder Methyl bedeutet.

2. Verfahren gemäss Anspruch 1, dadurch gekennzeichnet, dass man als Kettenabbrecher ein phenolisches Antioxidans der Formel I verwendet, worin n 0 oder 1 ist,
$R_1$ und $R_2$ unabhängig voneinander $C_1$-$C_4$-Alkyl oder $-CH_2SR_3$ bedeuten,
$R_3$ $C_4$-$C_{18}$-Alkyl, Benzyl oder Phenyl bedeutet und
$R_4$ Wasserstoff ist.

3. Verfahren gemäss Anspruch 2, dadurch gekennzeichnet, dass man als Kettenabbrecher ein phenolisches Antioxidans der Formel I verwendet, worin n 0 ist.

4. Verfahren gemäss Anspruch 3, dadurch gekennzeichnet, dass man als Kettenabbrecher die Verbindung der Formel

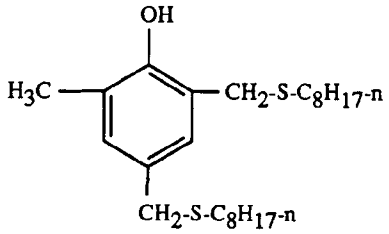

verwendet.

5. Verfahren gemäss Anspruch 1, dadurch gekennzeichnet, dass man gleichzeitig mit der Zugabe der Verbindung der Formel I oder unmittelbar danach ein zweites phenolisches Antioxidans zusetzt.

6. Verfahren gemäss Anspruch 1, dadurch gekennzeichnet, dass man die Verbindung der Formel I in einer solchen Menge verwendet, dass pro Mol der als Initiator verwendeten Organolithiumverbindung mindestens ein Mol phenolischer Hydroxylgruppen vorliegt.

7. Verwendung von Verbindungen der Formel I gemäss Definition in Anspruch 1 als Kettenabbrecher bei der mit Organolithiumverbindungen initiierten anionischen Lösungspolymerisation von 1,3-Dienen und deren Copolymerisation mit Styrolverbindungen.

## Claims

1. A process for terminating the organolithium-initiated anionic solution polymerisation of 1,3-dienes and the copolymerisation thereof with styrene compounds by addition of a chain-terminator to the polymerisation solution, which process comprises using as chain-terminator at least one phenolic antioxidant of formula I

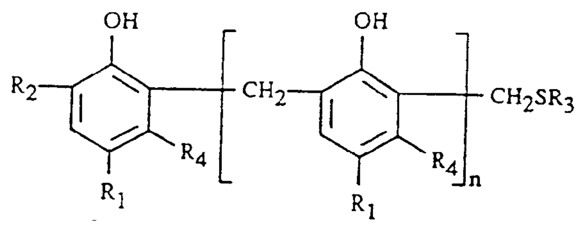

I

in which n is 0 to 3,
$R_1$ and $R_2$ are each independently of the other $C_1$-$C_{12}$alkyl, $C_5$-$C_8$cycloalkyl or $-CH_2SR_3$,
$R_3$ is $C_1$-$C_{18}$alkyl, phenyl or benzyl, and
$R_4$ is hydrogen or methyl.

2. A process according to claim 1, wherein the chain-terminator used is a phenolic antioxidant of formula I in which n is 0 or 1, $R_1$ and $R_2$ are each independently of the other $C_1$-$C_4$alkyl or $-CH_2SR_3$, $R_3$ is $C_4$-$C_{18}$alkyl, benzyl or phenyl, and $R_4$ is hydrogen.

3. A process according to claim 2, wherein the chain-terminator used is a phenolic antioxidant of formula I in which n is 0.

4. A process according to claim 3, wherein the chain-terminator is the compound of formula

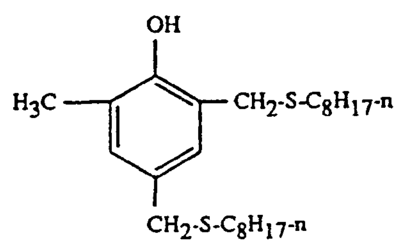

5. A process according to claim 1, which comprises adding a second phenolic antioxidant simultaneously with, or immediately after, the addition of the compound of formula I.

6. A process according to claim 1, wherein the compound of formula I is used in an amount such that at least one mole of phenolic hydroxyl groups is present per mole of organolithium compound used as initiator.

7. The use of a compound of formula I as defined in claim 1 as chain-terminator in the organolithium-initiated anionic solution polymerisation of 1,3-dienes and the copolymerisation thereof with styrene compounds.

## Revendications

1. Procédé pour arrêter la polymérisation anionique en solution de 1,3-diènes, polymérisation amorcée avec des composés organolithiques, ainsi que leur copolymérisation avec des composés du styrène, par addition d'un interrupteur de chaînes à la solution de polymérisation, procédé caractérisé en ce que l'on utilise comme interrupteurs des chaînes un ou plusieurs antioxydants phénoliques de formule I ci-dessous :

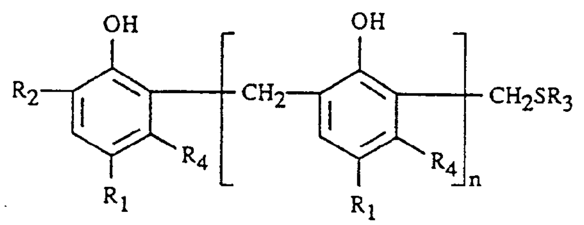 I

dans laquelle n est un nombre de 0 à 3,
$R_1$ et $R_2$ sont chacun, indépendamment l'un de l'autre, un alkyle en $C_1$-$C_{12}$, un cycloalkyle en $C_5$-$C_8$ ou un groupe -$CH_2SR_3$,
$R_3$ est un alkyle en $C_1$-$C_{18}$, un phényle ou un benzyle, et
$R_4$ l'hydrogène ou le groupe méthyle.

2. Procédé selon la revendication 1, caractérisé en ce que l'on utilise comme interrupteur des chaînes un anti-oxydant phénolique de formule I dans lequel n est le nombre 0 ou 1,
$R_1$ et $R_2$ sont des alkyles en $C_1$-$C_4$ ou un groupe -$CH_2SR_3$,
$R_3$ est un alkyle en $C_4$-$C_{18}$, un benzyle ou un phényle et
$R_4$ l'hydrogène.

3. Procédé selon la revendication 2, caractérisé en ce que l'on utilise comme interrupteur des chaînes un anti-oxydant phénolique de formule I dans lequel n est le nombre 0.

4. Procédé selon la revendication 3, caractérisé en ce que l'on utilise le composé de formule :

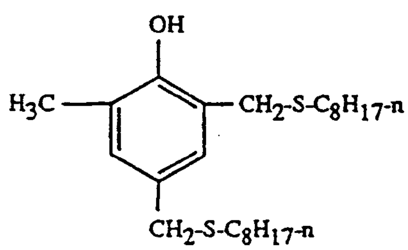

5. Procédé selon la revendication 1, caractérisé en ce que l'on ajoute un second anti-oxydant phénolique en même temps que le composé de formule I ou aussitôt après.

6. Procédé selon la revendication 1, caractérisé en ce que l'on ajoute le composé de formule I dans une proportion donnant au moins 1 Mol d'hydroxyles phénoliques par Mol du composé organolithique servant d'inducteur.

7. L'emploi de composés de formule I définis à la revendication 1 comme interrupteurs de chaînes dans la polymérisatino anionique en solution de 1,3-diènes, amorcée par des composés organolithiques, ainsi que dans leur copolymérisation avec des composés du styrène.